# FASCICULE DE BREVET EUROPEEN

(11) **EP 2 950 214 B1**
(45) Date de publication et mention de la délivrance du brevet: **03.04.2024**
(21) Numéro de dépôt: 15167605.3
(22) Date de dépôt: 13.05.2015
(51) Int. Cl.: G06F 9/52

(54) **BARRIERE DE SYNCHRONISATION MATERIELLE ENTRE ELEMENTS DE TRAITEMENT**
MATERIELLE SYNCHRONISATIONSSCHRANKE ZWISCHEN VERARBEITUNGSELEMENTEN
MATERIAL SYNCHRONISATION BARRIER BETWEEN PROCESSING ELEMENTS

(30) Priorité: 23.05.2014 US 201462002541 P; 05.12.2014 FR 1461941
(43) Date de publication de la demande: 02.12.2015
(73) Titulaire: Kalray, 91400 Orsay (FR)
(72) Inventeur: DUPONT DE DINECHIN, Benoît, 38000 Grenoble (FR); CHAMPSEIX, Thomas, 38100 Grenoble (FR); GUIRONNET DE MASSAS, Pierre, 38580 Allevard (FR)
(74) Mandataire: de Jong, Jean Jacques

(56) Documents cités:
- WO-A1-94/27216
- US-A1- 2005 050 374
- US-A1- 2006 225 074
- US-A1- 2010 110 089
- US-A1- 2011 022 817
- US-A1- 2012 179 896
- US-A1- 2013 125 133
- US-A1- 2014 026 138
- US-B1- 7 788 468
- US-B1- 7 861 060
- ABELLAN J L ET AL: "A G-Line-Based Network for Fast and Efficient Barrier Synchronization in Many-Core CMPs", PARALLEL PROCESSING (ICPP), 2010 39TH INTERNATIONAL CONFERENCE ON, IEEE, PISCATAWAY, NJ, USA, 13 septembre 2010 (2010-09-13), pages 267-276, XP031773712, ISBN: 978-1-4244-7913-9
- "A Distributed Run-Time Environment for the Kalray MPPA-256 Integrated Manycore Processor" In: BENOÎT DUPONT DE DINECHIN; PIERRE GUIRONNET DE MASSAS; G. LAGER ET AL.: "International Conférence on Computational Science (ICCS", 2013, ELSEVIER, XP002753779, vol. 18, pages 1654-1663, * le document en entier *

## Description

### Domaine technique

L'invention est relative à la synchronisation de processus exécutés en parallèle sur différents coeurs de processeur.

### Arrière-plan

Une barrière de synchronisation est une primitive clé dans la programmation de processus parallèles. Elle peut être mise en oeuvre entre des coeurs de processeur qui partagent une mémoire cache, ou entre des grappes de coeurs, où chaque grappe a sa mémoire locale, et où les grappes sont reliées par un réseau.

Une barrière de synchronisation matérielle est évoquée dans l'article [Benoît Dupont de Dinechin, Pierre Guironnet de Massas, G. Lager et al. "A Distributed Run-Time Environment for the Kalray MPPA-256 Integrated Manycore Processor", International Conférence on Computational Science (ICCS), volume 18, pages 1654-1663, Barcelona, Spain, 2013, Elsevier].

Selon cet article, chaque coeur ou grappe de coeurs possède des boîtes à lettres qui peuvent être configurées en mode de synchronisation. Dans ce mode, le contenu d'un nouveau message entrant est combiné par une opération OU bit à bit avec le contenu précédent de la boîte à lettres, et un coeur maître n'est notifié que si le nouveau contenu présente tous ses bits à 1.

Les documents US2012/179896A1, WO94/27216A1, US2005/050374A1, US2006/225074A1 et US2014/026138A1 décrivent des méthodes pour synchroniser des processus exécutés en parallèle sur des architectures multiprocesseurs.

### Résumé

On prévoit de façon générale un procédé de synchronisation de processus parallèles, comprenant les étapes consistant à répartir plusieurs fils d'exécution d'un programme entre des unités de traitement ; configurer un registre de synchronisation dans chaque unité de traitement de sorte que son contenu soit écrasé seulement par des bits qui sont à 1 dans des mots écrits dans le registre de synchronisation ; et attribuer une position de bit distincte des registres de synchronisation à chaque fil d'exécution. Lorsqu'un fil d'exécution courant d'une unité de traitement courante a atteint un point de synchronisation, l'unité de traitement courante écrit dans les registres de synchronisation de toutes les unités de traitement un mot dans lequel la position de bit attribuée au fil d'exécution courant est à 1, et suspend le fil d'exécution courant. Lorsque tous les bits attribués aux fils d'exécution sont à 1 dans le registre de synchronisation d'une unité de traitement courante, l'exécution des fils de programme suspendus est reprise dans l'unité de traitement courante, et le registre de synchronisation de l'unité de traitement courante est réinitialisé.

Le procédé peut être mis en oeuvre dans des unités de traitement connectées par un réseau-sur-puce, et comprendre les étapes consistant à communiquer entre unités de traitement par l'envoi de messages sur le réseau-sur-puce ; et écrire dans les registres de synchronisation de toutes les unités de traitement par la multidiffusion d'un message par l'unité de traitement courante à toutes les unités de traitement, y compris à l'unité de traitement courante elle-même.

Le procédé peut comprendre les étapes suivantes mises en oeuvre dans chaque unité de traitement : comparer de manière câblée le contenu du registre de synchronisation à une valeur attendue ; activer un signal de notification lorsque la comparaison est satisfaite ; et reprendre l'exécution des fils de programme suspendus en réponse à l'activation du signal de notification.

Le procédé peut comprendre les étapes suivantes mises en oeuvre dans chaque unité de traitement : exécuter en parallèle plusieurs fils de programme sur des coeurs respectifs de l'unité de traitement ; programmer un registre de participants avec un mot contenant des 1 à des positions attribuées aux coeurs ; lorsqu'un fil atteint son point de synchronisation, suspendre l'exécution du fil ; à l'activation du signal de notification, fournir les bits du registre de participants aux coeurs respectifs sur des lignes dédiées ; et reprendre l'exécution du fil dans chaque coeur dont la ligne dédiée passe à 1.

Le procédé peut comprendre l'étape consistant à réinitialiser le registre de synchronisation en réponse à l'activation du signal de notification.

### Description sommaire des dessins

Des modes de réalisation seront exposés dans la description suivante, faite à titre non limitatif en relation avec les figures jointes parmi lesquelles :
- la figure 1 représente schématiquement une infrastructure de réseau-sur-puce mettant en oeuvre un mode de réalisation de barrière de synchronisation matérielle gérée en mode maître-esclave ;
- les figures 2A à 2E illustrent des composants d'une barrière de synchronisation matérielle dans plusieurs phases au cours du traitement d'un exemple de synchronisation ;
- la figure 3 représente schématiquement une infrastructure de réseau-sur-puce mettant en oeuvre un mode de réalisation de barrière de synchronisation matérielle gérée de façon répartie ;
- la figure 4 est un diagramme temporel illustrant le fonctionnement d'une barrière de synchronisation répartie dans le cadre d'un exemple ;
- la figure 5 représente un mode de réalisation de barrière de synchronisation matérielle configurée pour synchroniser des coeurs de processeur connectés à un bus ; et
- la figure 6 est un chronogramme illustrant le fonctionnement de la barrière de synchronisation de la figure 5 dans le cadre d'un exemple.

### Description de modes de réalisation

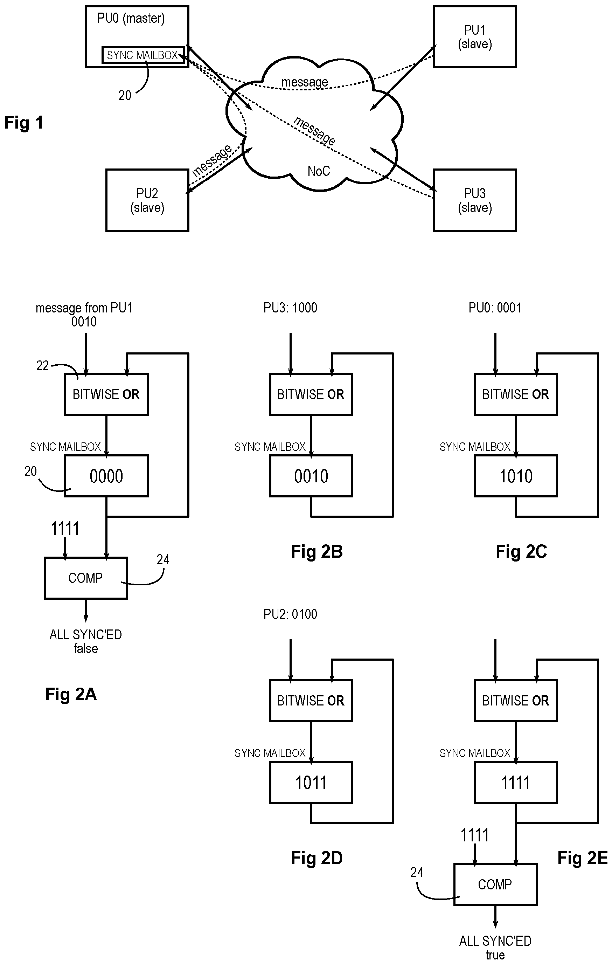

La figure 1 montre plusieurs unités de traitement PU0 à PU3, comme des coeurs de processeur ou des grappes de coeurs, qui sont connectées pour échanger des informations par des messages sur un réseau-sur-puce NoC. En général, chaque unité de traitement comprend plusieurs registres de boîte à lettres et un message peut cibler un registre de boîte à lettres spécifié d'une unité de traitement spécifiée.

Pour mettre en oeuvre une barrière de synchronisation matérielle selon les enseignements de l'article ICCS susmentionné, l'une des unités de traitement PU0 peut être configurée en tant que maître, et une boîte à lettres désignée de l'unité de traitement maître peut être configurée en tant que boîte à lettres de synchronisation 20 pour un groupe d'unités de traitement, par exemple les unités PU0 à PU3.

Plusieurs fils d'exécution d'un même programme d'ordinateur peuvent être répartis entre des unités de traitement et nécessiter une synchronisation. A chacun de ces fils, ou au coeur alloué au fil, est attribué un identifiant unique sous la forme d'une position de bit dans la boîte à lettres de synchronisation 20, en pratique un registre.

Quand un fil a atteint un point de synchronisation, ou une barrière, un message est envoyé à la boîte à lettres de synchronisation. Le contenu du message est un identifiant configuré pour avoir tous les bits à 0 sauf à la position qui identifie le fil ou le coeur. Le fil est ensuite suspendu. En pratique, la suspension d'un fil peut être obtenue par l'arrêt du coeur qui exécute le fil, par exemple en prévoyant une instruction de suspension (WATT) dans le code exécutable du fil. L'instruction de suspension arrête alors le coeur et le configure pour reprendre l'exécution en réponse à un événement externe défini dans l'instruction de suspension, par exemple l'activation d'un signal spécifique par un gestionnaire de ressources de l'unité de traitement. Dans d'autres architectures, l'instruction de suspension peut provoquer une interruption amenant le coeur, non pas à s'arrêter, mais à commuter sur une autre tâche. Alors l'activation du signal susmentionné interrompt de nouveau le coeur et l'amène à reprendre l'exécution du fil suspendu.

Les figures 2A à 2E illustrent un mode de réalisation d'une barrière de synchronisation matérielle, et un exemple détaillé de synchronisation en plusieurs étapes.

Comme le montre la figure 2A, le contenu de la boîte à lettres ou registre de synchronisation 20 est mis à jour par le résultat d'un OU bit à bit 22 du contenu précédent du registre et du contenu du message entrant, dans cet exemple le message 0010 indiquant que le fil de l'unité de traitement PU1 a atteint la barrière de synchronisation. Le contenu du registre de synchronisation est ensuite comparé en 24 à un motif qui indique que tous les fils ont atteint la barrière, par exemple le motif 1111. Dans la figure 2A, la boîte à lettres de synchronisation 20 vient d'être remise à zéro et contient le motif 0000, d'où il résulte que la comparaison renvoie "faux".

Dans la figure 2B, la boîte à lettres de synchronisation a été mise à jour à 0010 et reçoit un message 1000 indiquant que le fil de l'unité de traitement PU3 a atteint la barrière. La comparaison 24 renvoie "faux".

Dans la figure 2C, la boîte à lettres de synchronisation a été mise à jour par 1010 et reçoit le message 0001 indiquant que le fil de l'unité de traitement PU0 a atteint la barrière. Ce message peut être envoyé par l'unité de traitement maître à elle-même, étant donné que l'unité de traitement maître peut également être utilisée pour traiter un fil. La comparaison renvoie encore "faux".

Dans la figure 2D, la boîte à lettres de synchronisation a été mise à jour par 1011 et reçoit le message 0100. La comparaison renvoie encore "faux".

Dans la figure 2E, la boîte à lettres de synchronisation a été mise à jour par 1111. Tous les fils ont atteint la barrière et envoyé leur message. La comparaison 24 renvoie maintenant "vrai", signifiant que la barrière de synchronisation est levée. Cet événement peut interrompre le gestionnaire de ressources de l'unité de traitement maître PU0, qui peut alors multidiffuser une notification par l'intermédiaire du réseau à toutes les unités de traitement. Les gestionnaires de ressources des unités de traitement répondent à cette notification en provoquant la reprise d'exécution des fils suspendus. L'unité de traitement maître réinitialise en outre la boîte à lettres de synchronisation pour fixer la prochaine barrière de synchronisation.

La structure de la figure 1 exige cependant l'envoi de messages sur le réseau à la levée de la barrière de synchronisation, pour provoquer le redémarrage des fils suspendus, de sorte que les coeurs peuvent redémarrer de manière asynchrone et avec un retard indéterminé après la levée de la barrière.

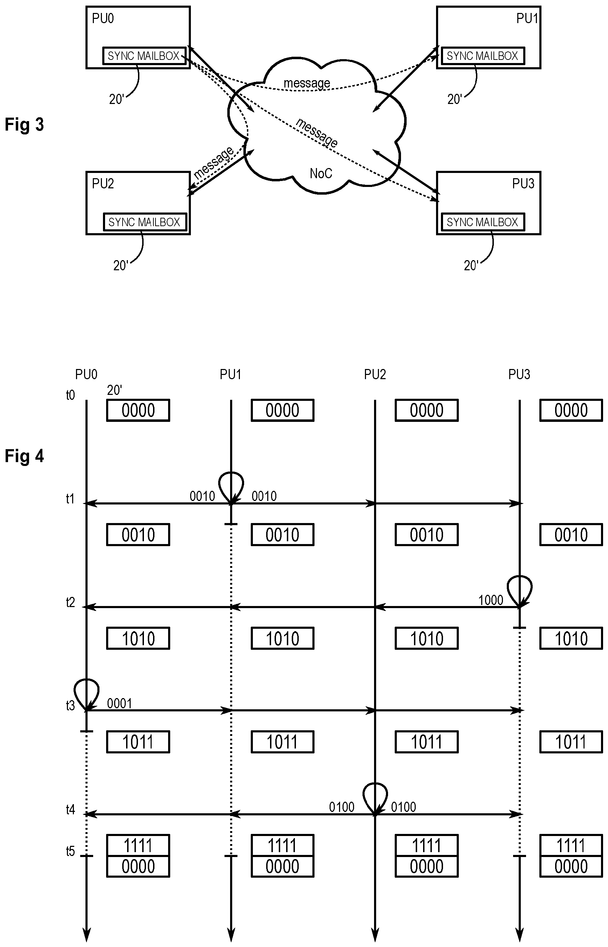

La figure 3 représente schématiquement une infrastructure de réseau-sur-puce mettant en oeuvre un mode de réalisation de barrière de synchronisation offrant une reprise rapide des fils suspendus à la levée de la barrière. Contrairement à la structure maître-esclave de la figure 1, la structure de la figure 3 fonctionne de manière répartie en ce que chaque unité de traitement gère une boîte à lettres de synchronisation locale, notée 20', qui réplique les contenus des autres boîtes à lettres de synchronisation locales.

De façon générale, chaque unité de traitement (par exemple l'unité PU0 à la figure 3), lorsqu'elle atteint la barrière de synchronisation, au lieu d'envoyer un message unique à un maître, multidiffuse le même message à toutes les unités de traitement. Chaque unité de traitement, y compris celle qui a diffusé le message, réagit à ce message en mettant à jour sa boîte à lettres de synchronisation locale selon la technique décrite plus haut, c'est-à-dire avec le résultat d'une combinaison OU bit à bit du contenu du message avec le contenu précédent de la boîte à lettres. De cette manière, chaque unité de traitement possède une copie locale du contenu qu'aurait la boîte à lettres unique de l'unité de traitement maître de la figure 1. Chaque unité de traitement peut alors reprendre le fil suspendu dès que sa boîte à lettres locale atteint la condition de levée de la barrière sans envoyer d'autre message.

La figure 4 est un diagramme temporel illustrant le fonctionnement d'une barrière de synchronisation répartie dans le cadre d'un exemple. Un fil exécuté dans chacune des unités de traitement PU0 à PU3 est représenté par un trait vertical, selon un axe où le temps évolue vers le bas. Le contenu du registre 20' servant de boîte à lettres de synchronisation locale est illustré à côté du fil correspondant à différents instants. L'exemple correspond à celui des figures 2A à 2E.

A un instant t0, les fils de programme exécutés dans les unités de traitement PU0 à PU3 suivent leur cours. Les registres 20' sont tous à leur valeur initiale 0000.

A un instant t1, le fil exécuté dans l'unité PU1 atteint la barrière de synchronisation. Le message 0010 est multidiffusé par le réseau à toutes les unités de traitement, y compris à l'unité PU1 elle-même. Pour simplifier le diagramme, la multidiffusion du message est représentée par des flèches horizontales, sous-entendant qu'elle est simultanée et instantanée. En pratique, les messages à destination des différentes unités de traitement peuvent être émis l'un après l'autre dans le réseau, et atteindre leurs destinations à des instants différents, en fonction de l'encombrement du réseau - cela ne modifie pas le principe de fonctionnement.

A la réception du message 0010, chaque unité de traitement, y compris l'unité PU1, met à jour son registre de synchronisation local 20' avec la valeur 0000 OU 0010 = 0010.

Le fil de l'unité PU1 s'arrête. La phase d'arrêt est représentée par un trait en pointillés.

A un instant t2, le fil exécuté dans l'unité PU3 atteint la barrière de synchronisation. Le message 1000 est multidiffusé par le réseau à toutes les unités de traitement, y compris à l'unité PU3 elle-même.

A la réception du message 1000, chaque unité de traitement, y compris l'unité PU3, met à jour son registre de synchronisation local 20' avec la valeur 0010 OU 1000 = 1010.

Le fil de l'unité PU3 s'arrête. La phase d'arrêt est représentée par un trait en pointillés.

A un instant t3, le fil exécuté dans l'unité PU0 atteint la barrière de synchronisation. Le message 0001 est multidiffusé par le réseau à toutes les unités de traitement, y compris à l'unité PU0 elle-même.

A la réception du message 0001, chaque unité de traitement, y compris l'unité PU0, met à jour son registre de synchronisation local 20' avec la valeur 1010 OU 0001 = 1011.

Le fil de l'unité PU0 s'arrête. La phase d'arrêt est représentée par un trait en pointillés.

A un instant t4, le fil exécuté dans l'unité PU2 atteint la barrière de synchronisation. Le message 0100 est multidiffusé par le réseau à toutes les unités de traitement, y compris à l'unité PU2 elle-même.

A la réception du message 0100, chaque unité de traitement, y compris l'unité PU2, met à jour son registre de synchronisation local 20' avec la valeur 1011 OU 0100 = 1111.

A un instant t5, les unités de traitement constatent que la barrière de synchronisation est levée par le contenu 1111 présent dans leurs registres de synchronisation locaux 20', reprennent les fils suspendus, et réinitialisent les registres 20'.

Comme le registre de synchronisation 20' est local, chaque unité de traitement peut comprendre un circuit logique simple conçu pour comparer le contenu de ce registre à un motif de levée de barrière, programmé par exemple dans un autre registre, et activer un signal sur une ligne dédiée qui signale l'événement attendu pour reprendre l'exécution du fil.

Alors le fil de l'unité PU2, qui peut anticiper la valeur du registre 20', ne s'arrête pas, ou seulement brièvement pendant la durée de prise en compte du message 0100 envoyé par l'unité de traitement PU2 à elle même. Un tel envoi local est très rapide car il a lieu en pratique sans transiter par le réseau.

Chaque unité de traitement peut être une grappe de plusieurs coeurs de processeur connectés par un bus. Dans ce cas, un fil à synchroniser peut être exécuté par l'un des coeurs et un autre coeur peut servir de gestionnaire de ressources, notamment pour gérer la communication par messages et le registre de synchronisation (20, 20'). Une grappe peut même exécuter plusieurs des fils à synchroniser, chacun sur un coeur différent. Alors les identifiants véhiculés dans les messages de synchronisation peuvent identifier plusieurs fils dans une même grappe et une grappe gérera autant de messages de synchronisation distincts qu'elle exécute de fils. Le nombre de fils pouvant être exécutés en parallèle est alors défini par la taille des identifiants, laquelle taille peut être supérieure au nombre de grappes connectées au réseau-sur-puce.

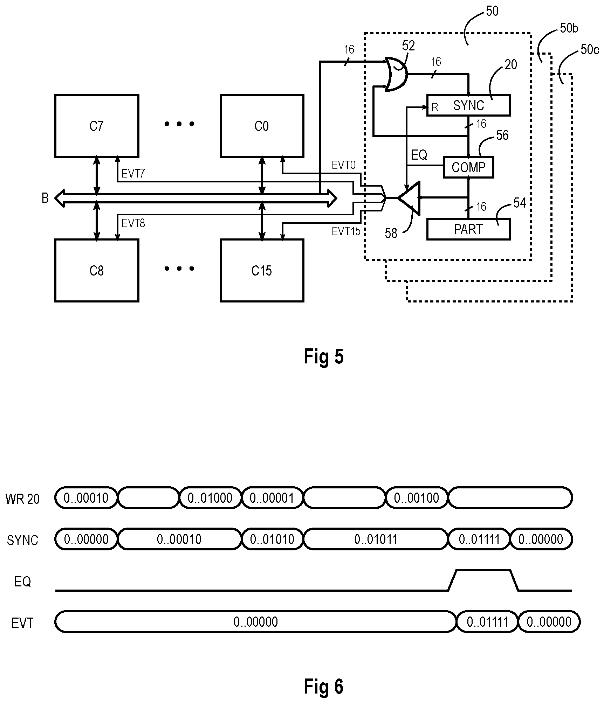

La figure 5 représente schématiquement un mode de réalisation de barrière de synchronisation matérielle configurée pour synchroniser plusieurs coeurs CO-C15 connectés à un même bus B.

Dans cette structure, une barrière de synchronisation matérielle 50 est formée autour d'un registre de synchronisation 20 accessible en écriture aux coeurs par le bus B. S'il y a seize coeurs CO à C15, le registre 20 peut avoir une taille de seize bits, à savoir un bit par coeur pouvant participer à la barrière. Les accès en écriture au registre 20 sont effectués par l'intermédiaire d'une porte 52 connectée pour produire une opération OU bit à bit entre le contenu du registre 20 et le mot présenté sur le bus pour écriture à l'adresse attribuée au registre 20.

La barrière 50 comprend en outre un registre de participants 54 programmable par le bus pour contenir un motif identifiant les coeurs participant à la barrière. Un comparateur 56 est connecté pour comparer les contenus des registres 20 et 54. En cas d'égalité, le comparateur 56 active un signal EQ qui peut générer un événement de levée de barrière EVT et réinitialiser le registre 20 en même temps. L'événement de levée de barrière peut être la transmission du contenu du registre de participants 54 aux coeurs par l'intermédiaire de portes trois états 58. Plus spécifiquement, chaque bit du registre 54 peut être transmis par une ligne dédiée EVT0 à EVT15 au coeur correspondant à la position du bit. Ainsi chaque coeur participant à la barrière est notifié de la levée de la barrière par la présence de l'état 1 sur sa ligne EVT dédiée.

Avec cette structure, on peut allouer un groupe arbitraire de coeurs à un groupe de fils d'un programme, en mettant à 1 les bits correspondant à ces coeurs dans le registre de participants 54. Plusieurs barrières de synchronisation semblables 50, 50b, 50c peuvent en outre être mises en oeuvre en parallèle pour des groupes de coeurs disjoints, chacune comprenant une paire de registres 20 et 54 accessibles par le bus à des adresses dédiées.

Le fonctionnement d'une telle barrière de synchronisation est similaire à celui décrit pour la barrière maître-esclave de la figure 1, à la différence près que la fonction de l'unité maître est accomplie par le circuit 50 et que les envois de messages par les unités de traitement PU sont remplacés par des écritures sur le bus par les coeurs. La notification de levée de barrière est faite directement par le circuit 50 via les lignes EVT, lignes que les coeurs peuvent surveiller en paramétrant une instruction de suspension (WATT) prévue dans le code exécutable des fils de programme.

La figure 6 est un chronogramme illustrant le fonctionnement de la barrière de synchronisation de la figure 5 dans le cadre de l'exemple des figures 2A à 2E. Ce chronogramme représente sur des rangées WR 20, SYNC, EQ, et EVT les cycles d'écriture dans le registre 20, les contenus du registre 20, l'évolution correspondante du signal de comparaison EQ, et l'évolution de la notification de levée de barrière EVT.

Les coeurs désignés pour participer à la barrière de synchronisation sont les coeurs CO à C3, auxquels on attribue les quatre premiers bits des registres 20 et 54. Ainsi le registre de participants 54 contient le motif de seize bits 00...01111. Les mots écrits dans le registre 20 par les coeurs participants sont des mots de seize bits sous la forme 000...0XXXX, les douze bits de poids fort de ces mots n'étant attribués à aucun coeur dans la barrière considérée (50). Ces bits libres pourront être attribués à d'autres groupes de coeurs dans des barrières parallèles (50b, 50c).

Initialement, le registre de synchronisation 20 contient un mot SYNC dont tous les bits sont à zéro. Le signal de comparaison EQ est inactif et les lignes d'événement EVT sont toutes à zéro.

Au fur et à mesure que les coeurs CO à C3 atteignent la barrière de synchronisation, ils écrivent leur identifiant dans le registre 20 par le bus, sous la forme d'un bit à 1 à la position correspondante d'un mot de seize bits. Chaque coeur suspend son fil, par exemple en s'arrêtant, après avoir écrit son identifiant, et attend l'activation de sa ligne d'événement EVT respective pour reprendre. Le cycle suivant chaque écriture, le registre 20 se trouve mis à jour par une opération OU bit à bit entre le mot écrit et le contenu précédent du registre.

Lorsque le registre 20 contient 00...01111, le signal EQ est activé, d'où il résulte que le contenu du registre de participants 54 est présenté sur les lignes d'événement EVT. Les coeurs reprennent l'exécution des fils suspendus. Au cycle suivant l'activation du signal EQ, le contenu du registre 20 se trouve réinitialisé, provoquant la désactivation du signal EQ et des lignes d'événement EVT.

La structure de la figure 5 peut être utilisée dans chaque grappe participant à une synchronisation par messages réseau selon la figure 3. Dans ce cas, un premier champ des registres 20 et 54, par exemple les seize bits de poids faible, peut être dédié aux fils locaux exécutés sur des coeurs de la grappe, et un deuxième champ, qui étend les registres 20 et 54, peut être dédié à des fils distants exécutés dans d'autres grappes. Le champ étendant le registre 54 n'est cependant pas transmis sur des lignes d'événement EVT, ces lignes étant dédiées aux coeurs locaux.

Lorsqu'arrive un message réseau identifiant un fil distant, celui-ci peut être traité par le gestionnaire de ressources de la grappe (par exemple l'un des coeurs de la grappe), qui écrit cet identifiant dans le registre 20 par le bus, selon le même mécanisme que celui utilisé pour les fils locaux.

Lorsque tous les fils, locaux et distants, ont atteint la barrière, les contenus des registres 20 et 54 coïncident. Le signal EQ est activé, provoquant la reprise des fils locaux suspendus.

Dans une telle application, les registres 20 et 54 peuvent avoir une taille importante pour gérer un grand nombre de coeurs, par exemple 64 bits ou plus. Dans ce cas on préfère, pour simplifier le comparateur 56, simplement vérifier que tous les bits du registre 20 sont à 1, ce qui est réalisable par un arbre de portes ET opérant sur le seul contenu du registre 20. Le contenu du registre 54 n'est alors pas fourni comme argument de comparaison au comparateur 56 - il sert seulement à identifier les lignes d'événement EVT à activer lorsque le signal EQ est activé.

Pour que tous les bits du registre 20 se trouvent à 1 en fin de synchronisation alors que le nombre de participants est inférieur à la taille du registre, on peut utiliser plusieurs méthodes. Par exemple, le registre 20 peut être réinitialisé en début de phase de synchronisation par un mot dont tous les bits sont à 1 sauf aux positions des participants. Les lacunes du registre 20 sont ainsi comblées au fur et à mesure que les coeurs écrivent leur mot de synchronisation.

Une autre possibilité est que les coeurs écrivent chacun un mot de synchronisation dont tous les bits sont à 1 entre la position affectée au coeur et la position affectée au coeur suivant (ou la fin du registre pour le dernier coeur). En d'autres termes, on affecte à chaque coeur plusieurs positions du registre de synchronisation, et cela de manière que l'ensemble des positions affectées corresponde à l'ensemble du registre de synchronisation. Par exemple, pour un groupe de quatre coeurs participants et un registre 20 de 64 bits, on attribue aux coeurs les positions 0, 16, 32, et 48. Le coeur de rang i (i compris entre 0 et 3) écrira alors un mot de synchronisation de 64 bits dont les bits de rangs 16i à 16i+15 sont à 1.

## Revendications

1. Procédé de synchronisation de processus parallèles exécutés dans des unités de traitement connectées par un réseau-sur-puce, comprenant les étapes suivantes :
• répartir plusieurs fils d'exécution d'un programme entre des unités de traitement (PUO... PU3) ;
• communiquer entre unités de traitement par l'envoi de messages sur le réseau-sur-puce ;
• configurer un registre de synchronisation (20) de sorte que son contenu soit écrasé seulement par des bits qui sont à 1 dans des mots écrits dans le registre de synchronisation ;
• attribuer une position de bit distincte du registre de synchronisation à chaque fil d'exécution ;
• lorsqu'un fil d'exécution courant d'une unité de traitement courante a atteint un point de synchronisation,
- écrire par l'unité de traitement courante dans le registre de synchronisation un mot dans lequel la position de bit attribuée au fil d'exécution courant est à 1, et
- suspendre le fil d'exécution courant ; et
**caractérisé en ce que** chaque unité de traitement comprend un registre de synchronisation respectif (20'), et le procédé comprend les étapes suivantes :
• dans l'étape d'écriture par l'unité de traitement courante, écrire ledit mot dans tous les registres de synchronisation par la multidiffusion d'un message par l'unité de traitement courante à toutes les unités de traitement, y compris à l'unité de traitement courante elle-même ; et
• lorsque tous les bits attribués aux fils d'exécution sont à 1 dans le registre de synchronisation d'une unité de traitement courante,
- reprendre l'exécution des fils de programme suspendus dans l'unité de traitement courante, et
- réinitialiser le registre de synchronisation de l'unité de traitement courante.

2. Procédé selon la revendication 1, comprenant les étapes suivantes mises en oeuvre dans chaque unité de traitement :
• comparer de manière câblée le contenu du registre de synchronisation (20) à une valeur attendue ;
• activer un signal de notification (EQ) lorsque la comparaison est satisfaite ; et
• reprendre l'exécution des fils de programme suspendus en réponse à l'activation du signal de notification.

3. Procédé selon la revendication 2, comprenant les étapes suivantes mises en oeuvre dans chaque unité de traitement :
• exécuter en parallèle plusieurs fils de programme sur des coeurs respectifs de l'unité de traitement ;
• programmer un registre de participants (54) avec un mot contenant des 1 à des positions attribuées aux coeurs ;
• lorsqu'un fil atteint son point de synchronisation, suspendre l'exécution du fil ;
• à l'activation du signal de notification (EQ), fournir les bits du registre de participants aux coeurs respectifs sur des lignes dédiées (EVT) ; et
• reprendre l'exécution du fil dans chaque coeur dont la ligne dédiée passe à 1.

4. Procédé selon la revendication 2, comprenant l'étape suivante :
• réinitialiser le registre de synchronisation en réponse à l'activation du signal de notification.

## Patentansprüche

1. Verfahren zum Synchronisieren von parallelen Prozessen, die in Verarbeitungseinheiten, die durch ein Network-on-Chip verbunden sind, ausgeführt werden, umfassend die folgenden Schritte:
• Verteilen mehrerer Ausführungsthreads eines Programms zwischen Verarbeitungseinheiten (PUO... PU3);
• Kommunizieren zwischen Verarbeitungseinheiten durch Senden von Nachrichten über das Network-on-Chip;
• Konfigurieren eines Synchronisationsregisters (20), sodass sein Inhalt nur durch Bits überschrieben wird, die in Wörtern, die in das Synchronisationsregister geschrieben sind, auf 1 stehen,
• Zuweisen einer eigenen Bitposition des Synchronisationsregisters für jeden Ausführungsthread;
• wenn ein aktueller Ausführungsthread einer aktuellen Verarbeitungseinheit einen Synchronisationspunkt erreicht hat,
- Schreiben eines Worts durch die aktuelle Verarbeitungseinheit in das Synchronisationsregister, wobei die Bitposition, die dem aktuellen Ausführungsthread zugewiesen ist, auf 1 steht, und
- Aussetzen des aktuellen Ausführungsthreads; und
**dadurch gekennzeichnet, dass** jede Verarbeitungseinheit ein jeweiliges Synchronisationsregister (20') umfasst, und das Verfahren die folgenden Schritte umfasst:
• in dem Schritt des Schreibens durch die aktuelle Verarbeitungseinheit, Schreiben des Worts in sämtliche der Synchronisationsregister durch Mehrfachsendung einer Nachricht durch die aktuelle Verarbeitungseinheit an sämtliche der Verarbeitungseinheiten, einschließlich der aktuellen Verarbeitungseinheit selbst; und
• wenn sämtliche der Bits, die den Ausführungsthreads zugewiesen sind, in dem Synchronisationsregister einer aktuellen Verarbeitungseinheit auf 1 stehen,
- Wiederaufnehmen des Ausführens der ausgesetzten Programmthreads in der aktuellen Verarbeitungseinheit und
- Reinitialisieren des Synchronisationsregisters der aktuellen Verarbeitungseinheit.

2. Verfahren nach Anspruch 1, umfassend die folgenden Schritte, die in jeder Verarbeitungseinheit implementiert werden:
• drahtgebundenes Vergleichen des Inhalts des Synchronisationsregisters (20) mit einem erwarteten Wert;
• Aktivieren eines Benachrichtigungssignals (EQ), wenn der Vergleich erfüllt ist, und
• Wiederaufnehmen des Ausführens des ausgesetzten Programmthreads als Reaktion auf die Aktivierung des Benachrichtigungssignals.

3. Verfahren nach Anspruch 2, umfassend die folgenden Schritte, die in jeder Verarbeitungseinheit implementiert werden:
• paralleles Ausführen mehrerer Programmthreads auf jeweiligen Kernen der Verarbeitungseinheit;
• Programmieren eines Teilnehmerregisters (54) mit einem Wort, das 1-Werte an den Positionen, die den Kernen zugewiesen sind, enthält;
• wenn ein Thread seinen Synchronisationspunkt erreicht, Aussetzen des Ausführens des Threads;
• bei Aktivieren des Benachrichtigungssignals (EQ), Bereitstellen der Bits des Teilnehmerregisters an die jeweiligen Kerne auf dedizierten Leitungen (EVT); und
• Wiederaufnehmen des Ausführens des Threads in jedem Kern, dessen dedizierte Leitung auf 1 wechselt.

4. Verfahren nach Anspruch 2, umfassend den folgenden Schritt:
• Reinitialisieren des Synchronisationsregisters als Reaktion auf die Aktivierung des Benachrichtigungssignals.

## Claims

1. A method of synchronizing parallel processes carried out in processing units connected by a network-on-chip, comprising the following steps:
• distributing multiple program execution threads between processing units (PUO... PU3);
• communicating between processing units by sending messages on the network-on-chip; and
• configuring a synchronization register (20) so that its content is overwritten only by bits that are set to 1 in words written in the synchronization register;
• assigning a distinct bit position of the synchronization registers to each program thread;
• when a current program thread in a current processing unit has reached a synchronization point,
- writing by the current processing unit in the synchronization register a word in which the bit position assigned to the current program thread is set to 1, and
- suspending the current program thread; and
**characterized in that** each processing unit comprises a respective synchronization register (20'), and the process comprises the following steps:
• in the step of writing by the current processing unit, writing said word in all the synchronization registers by multicasting a message from the current processing unit to all the processing units, including the current processing unit itself; and
• when all the bits assigned to the program threads are set to 1 in the synchronization register of a current processing unit,
- resuming the execution of the suspended program threads in the current processing unit, and
- resetting the synchronization register of the current processing unit.

2. The method of claim 1, comprising the following steps carried out within each processing unit:
• comparing in hardware the content of the synchronization register (20) with an expected value;
• asserting a notification signal (EQ) when the comparison is true; and
• resuming execution of the suspended program threads in response to the assertion of the notification signal.

3. The method of claim 2, comprising the following steps carried out within each processing unit:
• running in parallel several program threads on respective cores of the processing unit;
• programming a register of participants (54) with a word having 1s at positions assigned to the cores;
• when a thread reaches its synchronization point, suspending the execution of the thread;
• upon assertion of the notification signal (EQ), providing the bits of the register of participants to the respective cores on dedicated lines (EVT); and
• resuming the execution of the thread in each core for which the dedicated line is set to 1.

4. The method according to claim 2, comprising the step of:
• resetting the synchronization register in response to the assertion of the notification signal.
